Europäisches Patentamt

European Patent Office

Office européen des brevets

(11) Publication number: **0 465 697 B1**

## EUROPEAN PATENT SPECIFICATION

(45) Date of publication of patent specification: **14.12.94**  (51) Int. Cl.5: **B01D 67/00**, B01D 69/10, B01D 63/10, B01D 53/22

(21) Application number: **90113127.6**

(22) Date of filing: **10.07.90**

(54) **Preparation of gas separation membrane and spiral wound gas separation module.**

(43) Date of publication of application:
**15.01.92 Bulletin 92/03**

(45) Publication of the grant of the patent:
**14.12.94 Bulletin 94/50**

(84) Designated Contracting States:
**AT BE CH DE DK ES FR GB GR IT LI LU NL SE**

(56) References cited:
**GB-A- 1 256 491**
**GB-A- 1 276 151**
**GB-A- 1 529 877**
**US-A- 3 497 072**
**US-A- 4 430 807**

(73) Proprietor: **INDUSTRIAL TECHNOLOGY RE-SEARCH INSTITUTE**
**321 Kuang Fu Road**
**Sec. 2**
**Hsinchu 30042 (TW)**

(72) Inventor: **Tseng, Tsai-Wie**
**32, Kuang-Ming Village**
**Hsinchu, Taiwan R.O.C. (TW)**
Inventor: **Chang, Yih-Her**
**3F, No 34, 42 Lane, Tone Kaung Road**
**Hsinchu, Taiwan, R.O.C. (TW)**

Inventor: **Lee, Juh-Shyong**
**2F, No. 34, 42 Lane, Tone Kaung Road**
**Hsinchu, Taiwan, R.O.C. (TW)**
Inventor: **Wang, Shyh-Yen**
**130, Yiming Road,Chungli**
**Taiwan, 32016, R.O.C. (TW)**
Inventor: **Lin, Woei-Ling**
**No. 2, 110 Lane, Kao Feng Road**
**Hsinchu, Taiwan, R.O.C. (TW)**
Inventor: **Chang, Ren-Kuen**
**25, 393 Lane, Jong Shan Road**
**Hsinchu, Taiwan, R.O.C. (TW)**

(74) Representative: **Schmidt-Bogatzky, Jürgen, Dr.**
**Ing. Huth, Dietrich & Partner et al**
**Warburgstrasse 50**
**D-20354 Hamburg (DE)**

Rank Xerox (UK) Business Services
(3.10/3.09/3.3.3)

**Description**

BACKGROUND OF THE INVENTION

The invention relates to a process for preparing gas separation membranes and modules. Gas separation membranes are films which exhibit a higher permeability toward some gases than toward others. Industries increasingly employ such membranes for such uses as: oxygen enrichment of air, purification of nitrogen, recovery of hydrogen from hydrogen reaction systems, removal of acid gases from natural gas or biogas, and separation of acid such as $Co_2$ from $H_2S$.

Such membranes have no moving parts, negligible maintenance, low energy requirements, operational flexibility, and rapid start up and shut down. They may be formed as flat sheets, hollow fibers or tubes. A reinforcing fabric of woven or nonwoven polyester, or nylon increases membrane strength, improves operational properties and provides longer life.

The rate at which gas permeates a membrane can be expressed as p/l, where p is the gas permeability, and l is the effective membrane thickness. Cellulose acetate exhibits particular commercial importance because its effective thickness is about 0.1 micrometers. This in turn, results in a relatively high gas permeation rate.

Cloth reinforced membranes have been prepared by casting a cellulose acetate solution on the cloth and then gelling, leaching, annealing, solvent exchanging and drying the cloth/membrane combination. US-A-3 497 072 discloses a phase inversion technique for casting a cellulose acetate membrane. If a wet membrane is to be dried directly, the high surface tension of water will destroy the microporous structure. Drying methods which can prevent this destruction include first freeze drying; second adding an agent to reduce surface tension; and third exchanging the water solvent for another solvent. US-A-3 842 515 describes a solvent exchanging process which exchanges water with water missible alcohol, then exchanges the alcohol with a nonpolar organic solvent, and finally evaporates the nonpolar organic solvent to leave a dried membrane. US-A-4 080 743 describes a solvent exchanging process which first exchanges water with water missible organic solvents, and then evaporates the mixture to leave a dried membrane.

During the step of drying, different shrinkage ratios between the cellulose acetate membrane and the reinforcing cloth causes curling, wrinkling and cracking. Moreover, brittle membranes sometimes crack during winding into spiral wound modules. US-A-4 134 742 discusses these problems and attempts to reduce curling by utilizing a reinforcing cloth having a shrinkage ratio close to that of the membrane. This approach does not solve problems caused by uneven shrinking between the membrane in the reinforcing cloth, nor does it reduce cracking problems when winding a dried membrane into spiral wound module.

DISCLOSURE OF THE INVENTION

It is the primary object of the present invention to provide a novel and improved process for forming gas separation membranes and spiral wound gas separation modules avoids shrinking and curling by winding wet membrane onto a core before drying.

The scope of the invention is defined in the appended claims. It is shown that the spiral wount wet membrane is placed in a treating container, and treating solutions for solvent exchange are circulated through the container and membrane. After solvent exchange, the spiral wound membrane is dried.

In the following the invention is described more detailed in connection with the embodiments of the invention shown at the drawings.

BRIEF DESCRIPTION OF THE DRAWINGS

**Figure 1** is a partially cut-away view of a spiral wound gas separation membrane;
**Figure 2** is a flow chart of steps in a former process for producing spiralwound gas separation membranes and modules;
**Figure 3** is a schematic representation of an apparatus using the process of Fig. 2;
**Figure 4** is a flow chart of steps in a process for producing spiralwound gas separation membranes and modules embodying the present invention; and
**Figure 5** is a schematic representation of an apparatus for treating and drying gas separation membrane modules in accordance with the present invention.

## DETAILED DESCRIPTION OF THE PREFERRED EMBODIMENTS

The invention is a process for producing a gas separation membrane and module. Materials used for industrial gas separation membrane applications include cellulose acetate (CA), polysulfone, polyamide, polyimide, polycarbonate, polysiloxanes, poly (4-methyl-1-pentene), poly (phenylene oxide) and poly (vinylidene fluoride).

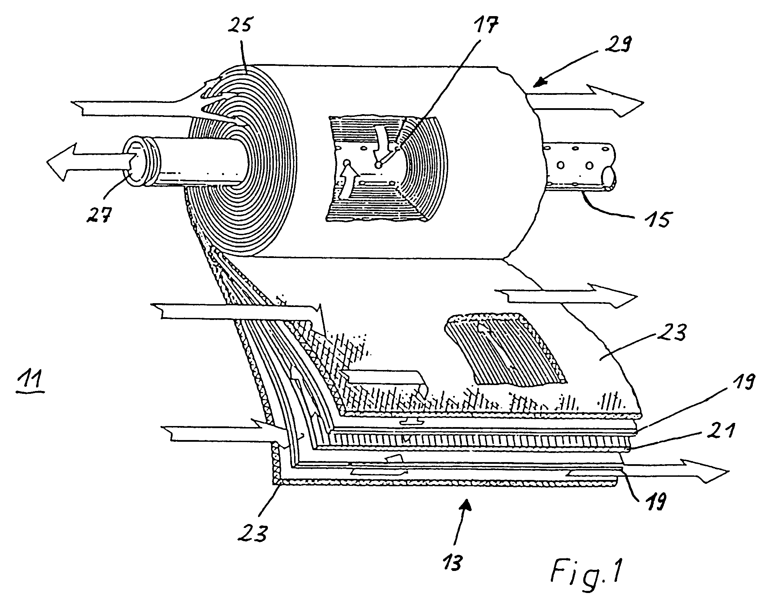

Figure 1 shows an example of such a spiral wound gas separation membrane 11 as disclosed in US-A-4 134 742. The module comprises a multilayer membrane sheet 13 wound onto a hollow core member 15 having perforations 17. The multilayer membrane sheet 13 consists of two layers of cloth reinforced membrane 19 separated by a layer of tricot netting 21. Each layer of reinforced membrane 19 is covered by an exterior layer of vexar netting 23 on the opposite side of the membrane 19 from the tricot netting 21. In operation, a gas mixture is feed into the input end 25 of the spiral wound multilayer membrane sheet 13. The gas mixture spreads through the vexar netting 23, and the more permeable gas of the mixture penetrates the reinforced membrane 19 into the tricot netting layer 21. The tricot netting 21 conducts the selected gas spirally to perforations 17 of the hollow core member 15. The permeated gas then passes through the perforations 17 in the hollow core member 15 and can be removed through the permeate output 27 of the hollow core member 15. Non-permeable gas of the gas mixtures passes through the vexar netting 23 and exits through the residual output 29.

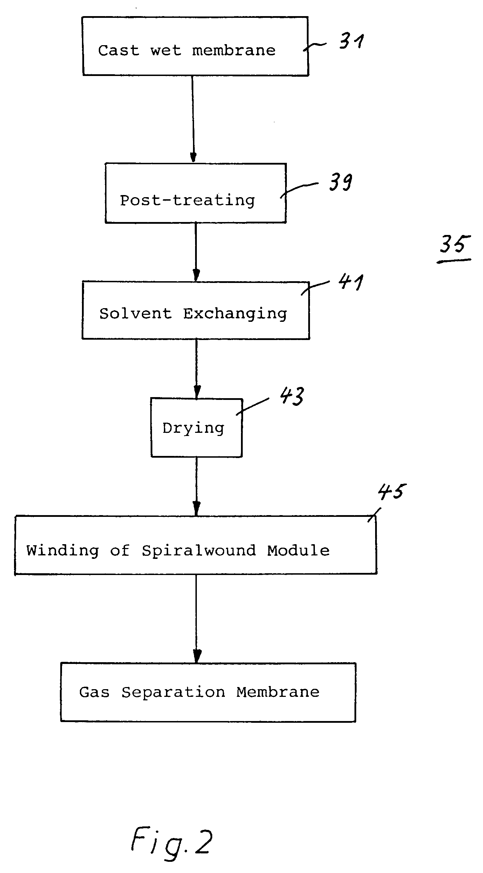

Figure 2 shows a process 35 descriped in US-A 4 134 742 for producing a spiral wound gas separation membrane as shown in Figure 1. In a casting step 37 wet membrane is cast onto a reinforcing fiber. In a post-treating step 39, the wet membrane is treated by gelling (immersing in a cold liquid), annealing (immersing in a hot liquid), or other treatment. In a solvent exchange step 41, one or more solvents replaces water used in the cast material. In a drying step 43, the exchange solvent is dried from the membrane. In a winding step 45, the dried membrane is wound onto a core to produce a spiral wound module.

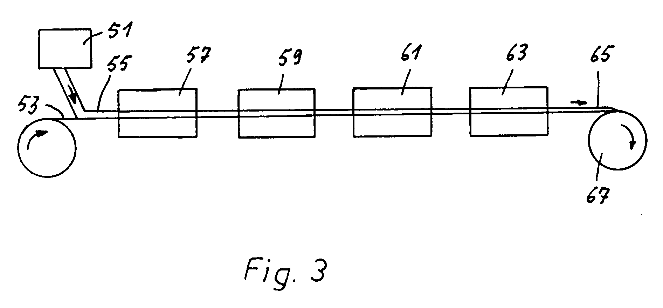

Figure 3 shows an apparatus for forming a spiral wound gas separation module using the traditional process of Figure 2. A casting solution 51 is cast onto a reinforcing fiber 53 to form a reinforced wet membrane 55. The reinforced wet membrane is immersed in a gelling tank 57 which contains cold water. The gelled membrane is then immersed in an annealing tank 59 containing hot water. The annealed membrane is then immersed in one or more solvent exchange tanks 61 which contain a series of exchange solvents. After solvent exchange, the membrane is dried in a drying apparatus 63. The dried membrane 65 is then wound onto a core to form a spiral wound module 67.

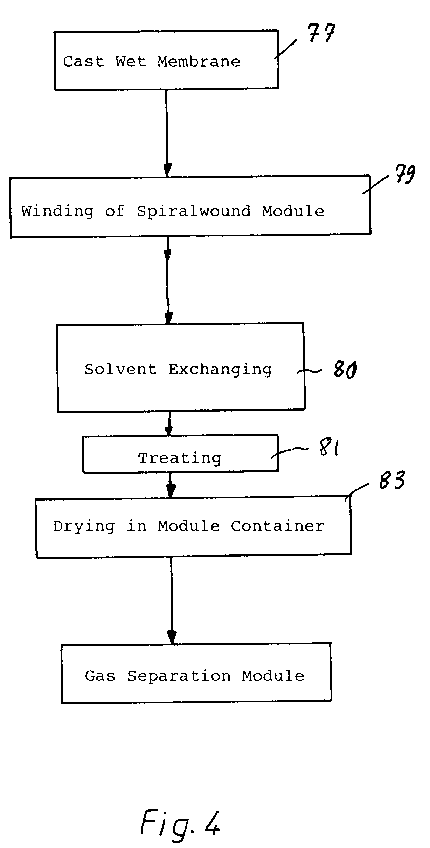

Figure 4 depicts the steps of the process of the present invention in a flow chart form. In a casting step 77 wet membrane is cast onto a reinforcing fiber. In a winding step 79 the fiber reinforced wet membrane is wound into a spiral module. In a solvent exchanging step 80 solvents replace water in the spiralwound module. Solvents are typically organic solvents. In a treating step 81, treatment solutions may be circulated to gel, anneal, repair or accomplish other changes to the particular membrane material used. In a drying step 83 the solvents are evaporated to leave a dry membrane.

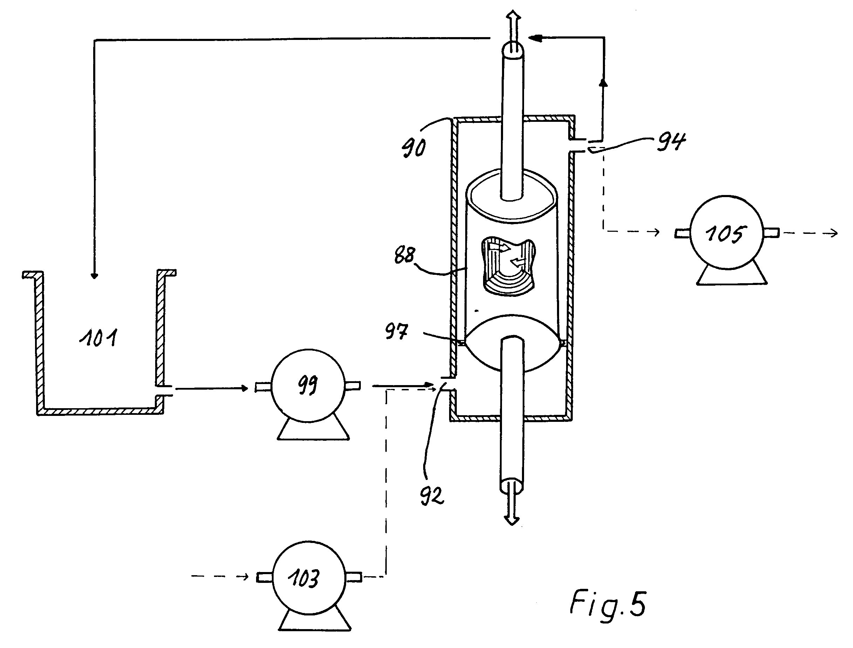

Figure 5 depicts an apparatus for conducting solvent exchange and drying of the module. A spiral module 88 is placed in a container 90 having an inlet 92 and an outlet 94 for fluid. An O-ring, or U-cup 97 forms a seal between the module 88 and the container 90 so that any fluid passing from the container inlet 92 to the outlet 94 must pass through the spiral module 88. A circulating pump 99 transfers fluid from a reservoir 101 to the container inlet 92. Excess fluid exits the container 90 through the container outlet 94 and returns to the reservoir 101. After completing solvent exchange, the fluid pump 99 can be replaced with an air pump 103 and the container outlet 94 can be connected to a vacuum pump 105. The air pump 103 forces dry air into the container 90 and the vacuum pump 105 assists removal of air from the container through the container outlet 94. The vacuum pump 105 is optional. The reservoir 101 may contain multiple sections for storing different solvents. The reservoirs may be temperature controlled, for example, to provide a cold gelling solution, a hot annealing solution, or a cold exchange solvent. The reservoir may hold a treating solution of the same material used for casting the wet membranes, thereby repairing damaged membranes. The embodiments described below illustrate details of the present invention.

### Embodiment 1

A cellulose acetate cast solution made up of materials listed in the Table 1 was cast on a glass plate with a $2,54 \cdot 10^{-2}$ cm (10 mill) doctor blade and allowed to gel for 10 to 15 minutes. The solution contains both organic and inorganic materials.

TABLE 1

| Cellulose Acetate (CA) Cast Solution Composition | |
| --- | --- |
| Components | Parts By Weight |
| Cellulose diacetate (CDA) | 8 g |
| Cellulose triacetate (CTA) | 8 g |
| Dioxane | 55 g |
| Acetone | 25 g |
| Methanol | 7 g |
| Maleic acid | 5 g |
| Acetic acid | 7 g |

The membrane was removed from the glass plate and annealed by emersion in 86° centigrade water. Annealed membrane was then immersed in isopropanol for 7 minutes, then in n-heptane for 7 minutes and then air dried at ambient room temperature. Polyester cloth was separately immersed in 86° centigrade water, immersed in isopropanol and n-heptane for 7 minutes each, and air dried in the same manner as the membrane. Shrinkage for both the membrane and the polyester cloth were measured and the results are tabulated in Table 2.

TABLE 2

| Shrinkage Ratios | | |
| --- | --- | --- |
| Treatment | Length & Width (cm) | Shrinkage Ratio (%) |
| Unannealed wet membrane | 8 | - |
| Annealed wet membrane | 7.8 | -2.5 |
| Annealed dry membrane | 7.65 | -4.4 |
| Unannealed dry membrane | 7.57 | -5.4 |
| Unannealed polyester cloth | 10 | 0 |
| Annealed polyester cloth | 10 | 0 |
| Polyester cloth after solvent soaking, then drying | 10 | 0 |

Because of the high shrinkage difference between membrane and polyester cloth, membrane reinforced with polyester cloth would curl, especially during the drying step.

Embodiment 2

The cellulose acetate solution of embodiment 1 was applied to polyester cloth with a 10 mill doctor blade, held for 5 to 10 second, then gelled in water at 1° centigrade for 5 to 15 minutes. The reinforced membrane was immersed in isopropanol at 3° centigrade for 7 minutes, then in n-heptane at 3° centigrade for 7 minutes. The reinforced membrane was fixed between two plates having a central hole so as to hold it around its periphery. A treating solution of 0.2% silicone and n-heptane was then poured onto the upper side of the reinforced membrane and a vacuum was applied to the lower side for 10 minutes. Application of the treating solution was stopped and vacuum held until the membrane dried completely. Gas permeation rates and selectivities of the dried membrane under $6,89 \cdot 10^5$ Pa (100 psi) pure gas were measured and the results tabulated in Table 3.

TABLE 3

Embodiment 2 Gas Permeation Rates and Selectivities

Gas Permeation Rates

$p/l$ $(CO_2)$ = 1.60 to 1.70 x $10^{-4}$ $cm^3/cm^2$ .S.cm Hg

$p/l$ $(CH_4)$ = 4.24 to 4.80 x $10^{-6}$ $cm^3/cm^2$ .S.cm Hg

$p/l$ $(O_2)$ = 2.20 to 2.73 x $10^{-5}$ $cm^3/cm^2$ .S.cm Hg

$p/l$ $(N_2)$ = 4.35 to 5.66 x $10^{-6}$ $cm^3/cm^2$ .S.cm Hg

Gas Selectivities

$\alpha$ $(CO_2 / CH_4)$ = 33 to 40

$\alpha$ $(O_2 / N_2)$ = 4.80 to 5.06

Embodiment 3

A wet cast reinforced membrane identical to the one used in embodiment 2 was prepared in an identical manner, except that, soaking in isopropanol and n-heptane occurred at room temperature. Gas permeation rates and selectivities of the resultant dry membrane were measured and are tabulated in Table 4.

TABLE 4

Embodiment 3 Gas Permeation Rates and Selectivities

Gas Permeation Rates

$p/l$ $(CO_2)$ = 2.31 to 3.13 x $10^{-4}$ $cm^3/cm^2$ .S.cm Hg

$p/l$ $(CH_4)$ = 7.46 to 10.8 x $10^{-6}$ $cm^3/cm^2$ .S.cm Hg

$p/l$ $(O_2)$ = 2.41 to 2.44 x $10^{-5}$ $cm^3/cm^2$ .S.cm Hg

$p/l$ $(N_2)$ = 4.97 to 5.00 x $10^{-6}$ $cm^3/cm^2$ .S.cm Hg

Gas Selectivities

$\alpha$ $(CO_2 / CH_4)$ = 27 to 34

$\alpha$ $(O_2 / N_2)$ = 4.85 to 4.88

The results revealed that the membrane exhibits good performance even though solvent exchange occurred at room temperature.

Embodiment 4

A cast solution made up of materials listed in Table 5 was cast on polyester cloth with a $2,54 \cdot 10^{-2}$ cm (10 mill) doctor blade, then gelled in 20° centigrade water for 10 to 20 minutes.

TABLE 5

| Polysulfone Cast Solution | |
|---|---|
| Material | Amount |
| P-3500 | 35 g |
| NMP (N-methyl pyrrolidone) | 80 g |
| THF (Tetrahydrofuran) | 80 g |
| PG (propylene glycol) | 10 g |

The reinforced membrane was fixed between two plates having central holes so as to hold it around its periphery and dried at 30° centigrade, 50% relative humidity for 24 hours. A 0.5% silicone solution in n-heptane was poured on the dry membrane while applying the vacuum on the lower side for 1 minute. The solution was stopped and vacuum applied until the membrane dried completely. Gas permeation rates and selectivities were measured, and the results are tabulated in Table 6.

## TABLE 6

### Embodiment 4 Gas Permeation Rates and Selectivities

#### Gas Permeation Rates

$$p/l \quad (CO_2) = \quad 7.20 \times 10^{-5} \quad cm^3/cm^2 \cdot S \cdot cm \; Hg$$

$$p/l \quad (CH_4) = \quad 4.6 \times 10^{-6} \quad cm^3/cm^2 \cdot S \cdot cm \; Hg$$

$$p/l \quad (O_2) = \quad 1.8 \times 10^{-5} \quad cm^3/cm^2 \cdot S \cdot cm \; Hg$$

$$p/l \quad (N_2) = \quad 4.1 \times 10^{-6} \quad cm^3/cm^2 \cdot S \cdot cm \; Hg$$

#### Gas Selectivities

$$\alpha \quad (CO_2 / CH_4) = \quad 15.68$$

$$\alpha \quad (O_2 / N_2) = \quad 4.39$$

Embodiment 5

The cast solution of embodiment 2 was cast on polyester cloth and held for 5 to 10 seconds. The reinforced membrane was then gelled at 1° centigrade for 5 to 15 minutes. The membrane was then heat annealed at 89° centigrade for 5 minutes, after which it was immersed in isopropanol at 3° centigrade for 7 minutes and n-heptane at 3° centigrade for 7 minutes. The membrane was air dried at ambient temperature, and observation showed severe curling as illustrated in Figures 5 and 6. Gas permeation rates and selectivities were measured and the results are tabulated in Table 7.

## TABLE 7

### Embodiment 5 Gas Permeation Rates and Selectivities

#### Gas Permeation Rates

$$p/l \quad (CO_2) = 3.8 \times 10^{-4} \text{ to } 5.1 \times 10^{-4} \quad cm^3/cm^2 \cdot S \cdot cm \ Hg$$

$$p/l \quad (CH_4) = 1.7 \times 10^{-5} \text{ to } 2.5 \times 10^{-5} \quad cm^3/cm^2 \cdot S \cdot cm \ Hg$$

#### Gas Selectivities

$$\alpha \quad (CO_2 / CH_4) = \ 20 \text{ to } 27$$

This data reveals that cracking and curling causes lower selectivity.

### Embodiment 6

A 101.6 cm (40 inch) wide membrane was prepared by continuous type membrane coating and wound into a 10,16 cm by 101.6 cm (4 inch by 40 inch) spiral module. The module was placed in a container as shown in Figure 6. Isopropanol was circulated for 1 day, then n-heptane for 1 day, then a 0.1% silicone solution in n-heptane for 1 day. Excess solution was decanted from the container, and the module was purged with dry air from the container inlet while applying vacuum to the container outlet. Gas permeation rates and selectivities of the dried module were measured under $6,89 \cdot 10^5$ Pa (100 psi) pure gas, and the results are tabulated in Table 8.

## TABLE 8

### Embodiment 6 Gas Permeation Rates and Selectivities

#### Gas Permeation Rate

$$p/l \quad (CO_2) \quad = \quad 415 \quad NL/min$$

$$p/l \quad (O_2) \quad = \quad 47 \quad NL/min$$

$$p/l \quad (N_2) \quad = \quad 8.4 \quad NL/min$$

$$p/l \quad (CH_4) \quad = \quad 10.7 \quad NL/min$$

#### Gas Selectivities

$$\alpha \quad (CO_2 / CH_4) = 38.8$$

$$\alpha \quad (O_2 / N_2) = 5.6$$

### Comparative Example

Two 2 inch by 12 inch annealed gas separation modules were prepared, one by drying before rolling and the other by rolling before drying. The selectivities of each membrane to nitrogen and oxygen were measured and the results shown in the first line (sample 1) of the Table 9. Two 5,08 cm by 30,48 cm (2 inch by 12 inch) unannealed membranes were similarly prepared, one by the drying before rolling and one by rolling before drying. The selectivities of the unannealed membranes to nitrogen and oxygen are shown in the second line (sample 2) of Table 9.

EP 0 465 697 B1

TABLE 9

Comparative Results

| Method | Traditional | The Instant Invention |
|---|---|---|
| $\alpha(O_2/N_2)$ of sample (1) | 4.7 | |
| $\alpha(O_2/N_2)$ of sample (2) | 3.0 | |
| $\alpha(O_2/N_2)$ of sample (3) | | 4.8 |
| $\alpha(O_2/N_2)$ of sample (4) | | 5.2 |

It is to be realized that only preferred embodiments of the invention have been described and that numerous substitutions, modifications and alterations are permissible without departing from the invention as defined in the following claims.

**Claims**

1. A process for preparing gas modules containing a reinforced membrane, characterized in the steps of
   - Casting a membrane-forming material on an fibre cloth, then geling in cold water to form a porous wet membrane,
   - Winding the membrane into spiral module, whereby one side of the membrane is covered with a layer of polypropylene material which enables the transport of the gas to be separated through the spiral module, without passing through the membrane, and the other side of the membrane is covered with a layer of polyester material which leads the separated gas into the core member,
   - Mounting the module in a solvent exchange apparatus,
   - Circulating the solvent exchange solution throughout the solvent exchange apparatus also throughout the inside of module for an appropriate period of time to remove the water contained within the membrane, drain the exchange solution, then circulating the repair solution throughout the inside of module for an appropriate period of time,
   - Purging a gas throughout the module until the membrane is dried.

2. A process according to claim 1, characterized in that the membrane-forming material comprises a combination of organic and inorganic materials.

3. A process according to claim 1, characterized in that the organic membrane forming material comprises a natural macromolecule.

4. A process according to claim 1, the organic membrane forming material comprises a synthetic polymer.

5. A process according to claim 1, characterized in that the organic membrane-forming material comprises one of cellulose acetate, polysulfone, polyamide, polycarbonate, polysiloxane, poly(4-methylpentene), poly(phenylene oxide), and poly(vinylidene fluoride).

6. A process according to claim 1, characterized in that the treating solution comprises a solution of the membrane forming material used for casting the membrane or the wet membrane.

7. A process according to claim 1, characterized in that the treating solution comprises an organic solvent.

8. A process according to claim 1, characterized in that the treating solution comprises silicone.

8

9. A process according to claim 1, characterized in that the treating solution comprises one of n-heptane, isopropanol, and silicone.

10. A process according to claim 1, characterized in that the period of circulation of the treating fluid is in the range of 1 minute to 48 hours.

11. A process according to claim 10, characterized in that the period of circulation of the treating fluid is in the range of 1 hour to 24 hours.

12. A process according to claim 10 or 11, characterized in that the period of circulation of the treating fluid is in the range of 11 hours to 13 hours.

13. A process according to claim 1, characterized in that the membrane comprises a single layer of membrane material.

14. A process according to claim 1, characterized in that the module comprises multiple layers of membrane material.

15. A process according to claim 1, characterized in that the module is purged with air.

16. A process according to claim 1, characterized in that the module is purged with inert gas.

17. Solvent exchange apparatus for execution of the process according to claim 1 and 6 to 12, characterized in that the apparatus comprises a closed container (90) having a container inlet (92) and a container outlet (94), and a seal (97) disposed within the container (90) in such a manner that when the spiral module (88) is disposed within the container (90), fluid pumped into the inlet (92) passes through the module (88) to the outlet (94).

18. Solvent exchange apparatus according to claim 17, characterized in that the container (90) is purged with air.

19. Solvent exchange apparatus according to claim 17, characterized in that the container (90) is purged with inert gas.

20. Solvent exchange apparatus according to claim 17, characterized in that the spiral module (88) is arranged in a unidirectional flow treating container (90).

**Patentansprüche**

1. Verfahren zur Herstellung von Gasmodulen mit einer verstärkten Membran, gekennzeichnet durch die Verfahrensschritte, daß
   - ein membranbildendes Material auf ein Fasergewebe gegossen wird, worauf eine Gelierung in kaltem Wasser zur Ausbildung einer porösen Naßmembran durchgeführt wird,
   - daß dann die Membran zu einem spiralförmigen Modul gewickelt wird, wobei eine Seite der Membran mit einer Polypropylenschicht bedeckt ist, die den Transport des durch das spiralförmige Modul abgeschiedenen Gases ermöglicht ohne die Membran zu durchströmen, und wobei die andere Seite der Membran mit einer Schicht aus Polyester bedeckt ist, die das abgeschiedene Gas in das Kernglied leitet,
   - daß dann das Modul in einem Lösungsmittel-Austauschapparat befestigt wird,
   - daß dann die Lösungsmittel Austauschlösung durch den Lösungsmittel-Austauschapparat wie auch durch das Innere des Moduls für eine angemessene Zeitperiode zur Entfernung des in der Membran enthaltenen Wassers umgewälzt wird, die Austauschlösung entwässert und dann der Umwälzung die Austauschlösung durch das Innere des Moduls für eine angemessene Zeitperiode umgewälzt wird,
   - und daß dann ein Gas durch das Modul geblasen wird bis die Membran getrocknet ist.

2. Verfahren nach Anspruch 1, dadurch gekennzeichnet, daß das membranformende Material eine Kombination von organischem und anorganischem Material enthält.

3. Verfahren nach Anspruch 1, dadurch gekennzeichnet, daß das organische membranformende Material natürliche Makromoleküle enthält.

4. Verfahren nach Anspruch 1, dadurch gekennzeichnet, daß das organische membranbildende Material ein synthetisches Polymer enthält.

5. Verfahren nach Anspruch 1, dadurch gekennzeichnet, daß das organische membranbildende Material eins der Zelluseacetate, Polysulfone, Polyamide, Polycarbonate, Polysyloxane, Poly(4-methyl-pentene), Poly(phenylenoxide) und Poly(viniliden Fluoride) enthält.

6. Verfahren nach Anspruch 1, dadurch gekennzeichnet, daß die Behandlungslösung eine Lösung des membranbildenden Materials aufweist, das zum Gießen der Membran oder der Naßmembran benutzt wird.

7. Verfahren nach Anspruch 1, dadurch gekennzeichnet, daß die Behandlungslösung eine organische Lösung umfaßt.

8. Verfahren nach Anspruch 1, dadurch gekennzeichnet, daß die Behandlungslösung Silikon enthält.

9. Verfahren nach Anspruch 1, dadurch gekennzeichnet, daß die Behandlungslösung eins der n-Heptane, Isopropernol und Silikone enthält.

10. Verfahren nach Anspruch 1, dadurch gekennzeichnet, daß die Umwälzperiode der Behandlungsflüssigkeit zwischen einer Minute und 48 Stunden beträgt.

11. Verfahren nach Anspruch 10, dadurch gekennzeichnet, daß die Umwälzperiode der Behandlungsflüssigkeit zwischen einer Stunde und 24 Stunden beträgt.

12. Verfahren nach Anspruch 10 oder 11, dadurch gekennzeichnet, daß die Umwälzperiode der Behandlungsflüssigkeit zwischen 11 Stunden und 13 Stunden beträgt.

13. Verfahren nach Anspruch 1, dadurch gekennzeichnet, daß die Membran eine einzelne Schicht aus Membranmaterial aufweist.

14. Verfahren nach Anspruch 1, dadurch gekennzeichnet, daß das Modul vielfache Schichten von Membranmaterial aufweist.

15. Verfahren nach Anspruch 1, dadurch gekennzeichnet, daß das Modul mit Luft ausgeblasen wird.

16. Verfahren nach Anspruch 1, dadurch gekennzeichnet, daß das Modul mit innertem Gas ausgeblasen wird.

17. Lösungsmittel-Austauschapparat zur Durchführung des Verfahrens nach den Ansprüchen 1 und 6 bis 12, dadurch gekennzeichnet, daß der Apparat einen geschlossenen Container (90) mit einem Containereinlaß (92) und einem Containerauslaß (94) aufweist, und eine Dichtung (97), die in dem Container (90) derart angeordnet ist, daß bei in den Container (90) eingesetztem Spiralmodul (88) in den Containereinlaß (92) gepumpte Flüssigkeit durch das Spiralmodul (88) zum Containerauslaß (94) geleitet wird.

18. Lösungsmittel Austauschapparat nach Anspruch 17, dadurch gekennzeichnet, daß der Container (90) mit Luft ausgeblasen ist.

19. Lösungsmittel Austauschapparat nach Anspruch 17, dadurch gekennzeichnet, daß der Container (90) mit innertem Gas ausgeblasen ist.

20. Lösungsmittel Austauschapparat nach Anspruch 17, dadurch gekennzeichnet, daß das Spiralmodul (88) in einem in einer Richtung durchströmten Container (90) zur Flüssigkeitsbehandlung angeordnet ist.

**Revendications**

1. Procédé pour préparer des modules gazeux contenant une membrane renforcée, caractérisé par les étapes consistant
   - à couler une matière formant membrane sur un tissu fibreux, ensuite à le gélifier dans l'eau froide afin de former une membrane humide poreuse,
   - à enrouler la membrane en un module en spirale, par ce moyen un côté de la membrane est recouvert avec une couche de matière polypropylène qui permet le transport du gaz à séparer à travers le module en spirale, sans passer à travers la membrane, et l'autre côté de la membrane est recouvert avec une couche de matière polyester qui conduit le gaz séparé à l'intérieur de l'élément central,
   - à monter le module dans un appareil d'échange de solvants,
   - à faire circuler la solution d'échange de solvants à travers l'appareil d'échange de solvants également à travers l'intérieur du module pendant une durée appropriée afin d'éliminer l'eau contenue à l'intérieur de la membrane, à drainer la solution d'échange, à faire ensuite circuler la solution de rechange à travers l'intérieur du module pendant une durée de temps appropriée,
   - à purger un gaz à travers le module jusqu'à ce que la membrane soit sèche.

2. Procédé selon la revendication 1, caractérisé en ce que la matière formant membrane comprend une combinaison de matières organiques et minérales.

3. Procédé selon la revendication 1, caractérisé en ce que la matière organique formant membrane comprend une macromolécule naturelle.

4. Procédé selon la revendication 1, dans lequel la matière organique formant membrane comprend un polymère synthétique.

5. Procédé selon la revendication 1, caractérisé en ce que la matière formant membrane organique comprend une des matières parmi l'acétate de cellulose, la polysulfone, la polyamide, le polycarbonate, le polysiloxane, le poly(4-méthyl-pentène), le poly(oxyde de phénylène) et le poly(fluorure de vinylidène).

6. Procédé selon la revendication 1, caractérisé en ce que la solution de traitement comprend une solution de la matière formant membrane utilisée pour le coulage de la membrane ou de la membrane humide.

7. Procédé selon la revendication 1, caractérisé en ce que la solution de traitement comprend un solvant organique.

8. Procédé selon la revendication 1, caractérisé en ce que la solution de traitement comprend un silicone.

9. Procédé selon la revendication 1, caractérisé en ce que la solution de traitement comprend un des solvants parmi le n-heptane, l'isopropanol et un silicone.

10. Procédé selon la revendication 1, caractérisé en ce que la durée de circulation du fluide de traitement est dans la gamme de 1 minute à 48 heures.

11. Procédé selon la revendication 10, caractérisé en ce que la durée de circulation du fluide de traitement est dans la gamme de 1 heure à 24 heures.

12. Procédé selon la revendication 10 ou 11, caractérisé en ce que la durée de circulation du fluide de traitement est dans la gamme de 11 heures à 13 heures.

13. Procédé selon la revendication 1, caractérisé en ce que la membrane comprend une couche unique de matière de membrane.

14. Procédé selon la revendication 1, caractérisé en ce que le module comprend des couches multiples de matière de membrane.

**15.** Procédé selon la revendication 1, caractérisé en ce que le module est purgé avec de l'air.

**16.** Procédé selon la revendication 1, caractérisé en ce que le module est purgé avec un gaz inerte.

**17.** Appareil d'échange de solvants pour l'exécution du procédé selon la revendication 1 et 6 à 12, caractérisé en ce que l'appareil comprend un récipient fermé (90) ayant une entrée de récipient (92) et une sortie de récipient (94) et une étanchéité (97) disposé à l'intérieur du récipient (90) de telle sorte que lorsque le module en spirale (88) est disposé à l'intérieur du récipient (90), le fluide pompé dans l'entrée (92) traverse le module (88) vers la sortie (94).

**18.** Appareil d'échange de solvants selon la revendication 17, caractérisé en que le récipient (90) est purgé avec de l'air.

**19.** Appareil d'échange de solvants selon la revendication 17, caractérisé en ce que le récipient (90) est purgé avec un gaz inerte.

**20.** Appareil d'échange de solvants selon la revendication 17, caractérisé en ce que le module en spirale (88) est disposé dans un récipient de traitement à écoulement unidirectionnel (90).

Fig.1

```
┌─────────────────────────────┐
│      Cast wet membrane      │ ⟵ 31
└─────────────────────────────┘
               │
               ▼
┌─────────────────────────────┐
│        Post-treating        │ ⟵ 39
└─────────────────────────────┘
               │                          35
               ▼
┌─────────────────────────────┐
│      Solvent Exchanging     │ ⟵ 41
└─────────────────────────────┘
               │
               ▼
        ┌──────────────┐
        │    Drying    │ ⟵ 43
        └──────────────┘
               │                          45
               ▼
┌─────────────────────────────────────────┐
│     Winding of Spiralwound Module       │
└─────────────────────────────────────────┘
               │
               ▼
┌─────────────────────────────┐
│   Gas Separation Membrane   │
└─────────────────────────────┘
```

Fig.2

14

Fig. 3

```
┌─────────────────────────┐
│   Cast Wet Membrane     │ ╱ 77
└─────────────────────────┘
              │
              ▼
┌──────────────────────────────┐
│ Winding of Spiralwound Module│ ╱ 79
└──────────────────────────────┘
              │
              │
              ▼
┌─────────────────────────┐
│   Solvent Exchanging    │ ～ 80
└─────────────────────────┘
              │
              ▼
     ┌─────────────────┐
     │    Treating     │ ～ 81
     └─────────────────┘
              │
              ▼
┌──────────────────────────────┐
│  Drying in Module Container  │ ╱ 83
└──────────────────────────────┘
              │
              ▼
┌─────────────────────────┐
│  Gas Separation Module  │
└─────────────────────────┘
```

Fig. 4

Fig.5

EP 0 465 697 B1